(19) **Europäisches Patentamt**

**European Patent Office**

**Office européen des brevets**

(11) **EP 1 634 520 A1**

(12) **DEMANDE DE BREVET EUROPEEN**

(43) Date de publication:
**15.03.2006 Bulletin 2006/11**

(51) Int Cl.:
***A47J 31/54*** (2006.01)   ***F24H 1/10*** (2006.01)

(21) Numéro de dépôt: **04021674.9**

(22) Date de dépôt: **13.09.2004**

| | |
|---|---|
| (84) Etats contractants désignés:<br>**AT BE BG CH CY CZ DE DK EE ES FI FR GB GR HU IE IT LI LU MC NL PL PT RO SE SI SK TR**<br>Etats d'extension désignés:<br>**AL HR LT LV MK** | • **Pulzer, Jean-Bernard**<br>**2133 Saint-Sulpice (FR)** |
| (71) Demandeur: **NESTEC S.A.**<br>**1800 Vevey (CH)** | (74) Mandataire: **Ravenel, Thierry Gérard Louis et al**<br>**I C B,**<br>**Ingénieurs Conseils en Brevets SA,**<br>**7, rue des Sors**<br>**2074 Marin (CH)** |
| (72) Inventeurs:<br>• **Boussemart, Christophe**<br>**74500 Lugrin (FR)** | |

(54) **Dispositif de chauffage d'un liquide et procede pour chauffer un liquide**

(57) La présente invention concerne un dispositif de chauffage d'un liquide (1), notamment pour des applications ménagères et plus particulièrement pour la préparation de boissons chaudes comprenant un corps muni d'un canal pour la circulation d'un liquide, ledit canal ayant une entrée de liquide (10) et une sortie (20) de liquide et étant associé à au moins un corps de chauffe électrique dont l'alimentation est commandée par des moyens de commutation reliés à des moyens de commande, ledit dispositif étant caractérisé en ce ledit canal comprend au moins des première et deuxième portions de canal reliées entre elles par une troisième portion de canal formant un conduit de liaison, en ce que lesdites au moins première et deuxième portions de canal sont associées chacune à au moins un corps de chauffe et en ce que le conduit de liaison est associé à un capteur de température intermédiaire (48) relié audits moyens de commande, ledit capteur de température intermédiaire étant arrangé pour venir en contact direct avec le liquide circulant dans ledit canal et les moyens de commande et de commutation étant configurés pour commander le corps de chauffe de ladite au moins seconde portion de canal en fonction de la quantité d'énergie utile à apporter dans ladite seconde portion de canal pour monter la température intermédiaire mesurée par ledit capteur de température intermédiaire jusqu'à une température de consigne.

Fig. 1

**Description**

La présente invention concerne un dispositif de chauffage d'un liquide destiné à équiper une machine pour la préparation de boissons chaudes.

La présente invention concerne également un procédé pour chauffer rapidement et précisément un liquide.

On connaît déjà du brevet EP 1 380 243 un dispositif de chauffage destiné notamment à équiper des machines à café. Ce dispositif de chauffage comprend un tube métallique dans lequel peut circuler le liquide à chauffer à partir d'un canal d'entrée vers un canal de sortie. La surface extérieure du tube est recouverte sur plusieurs sections de sa longueur d'une pluralité de jeux de résistances électriques. Un insert cylindrique s'étend dans le tube pour former, avec la paroi intérieure du tube, un canal hélicoïdal pour la circulation du liquide et ainsi favoriser une circulation turbulente et un transfert d'énergie rapide du tube au liquide. Un débitmètre est par ailleurs disposé en amont du canal l'entrée. Le dispositif comprend en outre une pluralité de capteurs de température répartis sur le tube à l'entrée et à la sortie de chaque jeu de résistances. Les jeux de résistances sont connectés entre eux et commutables pour déterminer, en réponse aux signaux des capteurs de température et du débitmètre, la quantité d'énergie à fournir au liquide pour que le liquide atteigne à la sortie de chaque section les températures souhaitées tout en limitant les variations de demande en énergie.

Bien que ce dispositif donne des résultats satisfaisants en termes de rapidité de chauffage, ce dispositif est relativement encombrant en ce que le volume d'eau à chauffer détermine la hauteur du tube, et il est onéreux en ce qu'il nécessite l'impression de résistances sous forme de films épais à la surface du tube (appelés couramment "thick films").

En outre, la précision de la régulation de la température du liquide est limitée par le fait que le liquide ne vient pas directement en contact avec les capteurs qui sont disposés à l'extérieur du tube. La vitesse de réponse à des différences de températures, due à l'inertie du liquide à chauffer, est aussi plus lente, ce qui nuit à la précision de la régulation de la température. A noter également que la proximité des capteurs de température des jeux de résistances risque d'influencer la mesure de manière non contrôlable en raison de la conduction thermique qui se produit au travers de la paroi du tube. A cela s'ajoutent les incertitudes de mesure du débitmètre. De plus, ce document est silencieux sur les réalisations pratiques permettant l'agencement des capteurs de température à la surface du tube, un tel agencement paraissant en tout état de cause délicat en raison de la technologie proposée pour réaliser les jeux de résistances.

La présente invention a donc pour but de remédier aux inconvénients susmentionnés ainsi qu'à d'autres encore en fournissant un dispositif de chauffage d'un liquide mettant en oeuvre des moyens simples, compacts et peu coûteux.

La présente invention a également pour but de fournir un tel dispositif de chauffage permettant de chauffer instantanément un liquide, c'est-à-dire sans besoin d'un préchauffage ou d'un stockage d'énergie thermique préalable, à une température de sortie donnée, comprise entre la température d'entrée et 100°C, d'améliorer la précision en ce qui concerne la température de sortie du liquide, ainsi que d'optimiser l'énergie utile pour le chauffage du liquide à ladite température de consigne.

A cet effet, la présente invention concerne un dispositif de chauffage d'un liquide en liquide chaud ou en vapeur, notamment pour des applications ménagères et plus particulièrement pour la préparation de boissons chaudes comprenant un corps muni d'un canal pour la circulation d'un liquide, ledit canal ayant une entrée de liquide et une sortie de liquide et étant associé à au moins un corps de chauffe électrique dont l'alimentation est commandée par des moyens de commutation reliés à des moyens de commande, ledit dispositif étant caractérisé en ce que ledit canal comprend au moins des première et deuxième portions de canal reliées entre elles par une troisième portion de canal formant un conduit de liaison, en ce que lesdites au moins première et deuxième portions de canal sont associées chacune à au moins un corps de chauffe et en ce que le conduit de liaison est associé à un capteur de température intermédiaire relié auxdits moyens de commande, ledit capteur de température intermédiaire étant arrangé pour venir en contact direct avec le liquide circulant dans ledit conduit et les moyens de commande et de commutation étant configurés pour commander le corps de chauffe de ladite au moins seconde portion de canal en fonction de la quantité d'énergie utile à apporter dans ladite seconde portion de canal pour amener la température intermédiaire mesurée par ledit capteur de température intermédiaire jusqu'à une température de consigne.

Grâce à ces caractéristiques, on peut mesurer directement la température intermédiaire du liquide à chauffer avec une grande précision pour ensuite commander le ou les corps de chauffe disposés en aval du capteur de température de manière appropriée pour amener le liquide de la température intermédiaire mesurée à une température de consigne désirée en sortie.

Selon des caractéristiques avantageuses, le dispositif de l'invention comprend en outre un capteur de température d'entrée de liquide arrangé pour venir en contact direct avec le liquide à l'entrée du dispositif et un débitmètre disposé en amont de l'entrée de la première chambre et des moyens de régulation prévus pour calculer un facteur de correction de la puissance à affecter au corps de chauffe de ladite seconde portion de canal en fonction des températures d'entrée et intermédiaire mesurées, du débit mesuré par le débitmètre et du bilan d'énergie.

En pratique, on mesure la température du liquide à chauffer en entrée du dispositif, et on détermine la quantité d'énergie à fournir en fonction de la quantité de liquide à chauffer (déterminée par le débitmètre) pour atteindre une température intermédiaire de consigne selon la formule E = Quantité de liquide à chauffer x (T intermédiaire de consigne - T entrée mesurée) x Capacité calorifique du liquide. La structure du dispositif de la présente invention permet donc avantageusement de déterminer précisément la différence entre température intermédiaire de consigne et la température intermédiaire mesurée et donc de calculer un facteur de correction pour déterminer précisément la quantité d'énergie à fournir au liquide dans la ou les portions de canal suivantes pour amener le liquide de la température intermédiaire mesurée à la température de sortie de consigne.

Le dispositif de l'invention permet ainsi de compenser les erreurs et corriger les imprécisions et tolérances provenant des éléments de mesure et ceux pour la production de l'énergie de chauffage comme, par exemple, les erreurs de mesure du débitmètre, les tolérances sur la puissance des résistances, la tension du réseau, les tolérances sur les capteurs de température et autres.

Afin de corriger les erreurs sur la seconde portion de canal; en particulier, les tolérances sur la puissance des résistances, la tension du réseau, et autres imprécisions, on peut mesurer la température de sortie et selon les mêmes calculs de bilans d'énergie calculer un nouveau facteur de correction applicable à cette seconde portion de canal. Ce second facteur de correction s'appliquera sur la quantité d'énergie à appliquer au prochain calcul.

Selon un mode de réalisation préféré de l'invention, les portions de canal associées respectivement à au moins un corps de chauffe forment chacune des chambres reliées entre elles par un conduit de liaison, lequel présente une section inférieure à celle des chambres, un ou plusieurs corps de chauffe étant immergés dans chacune des chambres.

Selon des caractéristiques avantageuses, chaque corps de chauffe comprend au moins une résistance, chaque résistance de chaque corps de chauffe étant commutable indépendamment. De cette façon, les ajustements de températures peuvent être plus rapidement réalisés et avec une plus grande précision de température en sortie. On évite aussi les problèmes liés aux brusques montées ou descentes de tension (effet de "scintillement").

Selon un premier mode de réalisation, les corps de chauffe sont au nombre de deux, chacun étant logé dans une chambre séparée et comprenant chacun deux résistances, chaque résistance des deux corps de chauffe étant configurée pour être commutée indépendamment l'une de l'autre par les moyens de commutation.

Selon un deuxième mode de réalisation, les corps de chauffe sont au nombre de quatre, chacun étant logé dans une chambre séparée et comprenant une résistance, chaque résistance étant configurée pour être commutée indépendamment par les moyens de commutation. Dans ce mode de réalisation, le capteur de température intermédiaire est disposé en aval de la chambre communiquant avec l'entrée de liquide et en amont de la chambre communiquant avec la sortie de liquide.

La structure du dispositif selon l'invention permet ainsi d'utiliser des corps de chauffe ayant la forme de cartouches chauffantes qui sont commercialement disponibles et particulièrement économiques en comparaison avec les jeux de résistances imprimées de l'art antérieur.

L'utilisation d'une pluralité de ce type de cartouche ayant une puissance nominale inférieure à 450W sous 230V permet avantageusement, par une commutation successive et non simultanée des différentes cartouches disposées dans le canal, à une certaine fréquence, de préférence de l'ordre de 10 ms, de répartir la charge électrique sur le réseau et ainsi de limiter les risques de brusques sauts de tension provoquant les phénomènes de scintillement.

L'invention se rapporte aussi à un procédé pour chauffer rapidement et précisément un liquide notamment pour des applications ménagères et plus particulièrement pour la préparation de café ou autres boissons chaudes. Le procédé comprend un dispositif de chauffage comprenant un corps muni d'un canal pour la circulation du liquide, au moins un premier corps de chauffe associé à une première portion de canal, au moins un second corps de chauffe associé à une seconde portion de canal. Selon le procédé de l'invention:

on mesure la température du liquide à l'entrée du dispositif,
on mesure la quantité de liquide à chauffer par un débitmètre,
on calcule la quantité d'énergie théorique à fournir par le premier corps de chauffe en fonction de la quantité de liquide mesurée, de la température mesurée à l'entrée du dispositif, d'une température intermédiaire de consigne et de la capacité calorifique du liquide,
on mesure la température intermédiaire entre le premier et second corps de chauffe,
on calcule la quantité d'énergie théorique à fournir par le second corps de chauffe en fonction de la quantité de liquide à chauffer mesurée, de la température intermédiaire mesurée, de la température de consigne en sortie du dispositif et de la capacité calorifique du liquide,
puis, on applique ces quantités d'énergie calculées, respectivement, aux premiers et second corps de chauffe pour amener le liquide jusqu'à la (ou tout au moins au plus près de la) température de consigne désirée en sortie du dispositif.

Un tel procédé permet d'obtenir une précision améliorée de la température en sortie désirée du liquide.

Selon un mode préférentiel, le procédé prend en compte les erreurs et imprécisions globales pouvant provenir de différents composant du dispositif (par exemple, débitmètre, capteurs de températures, résistances, etc.) ou de la tension du réseau de façon à affiner la quantité d'énergie fournie, notamment, au second corps de chauffe, et obtenir ainsi, une précision de chauffage améliorée. Pour cela, on calcule un facteur de correction selon la formule:

$$k = (\text{Température intermédiaire mesurée} - \text{Température d'entrée mesurée})/(\text{Température intermédiaire de consigne} - \text{Température d'entrée mesurée}),$$

et
l'on applique ce facteur de correction pour calculer la quantité d'énergie à fournir par le second corps de chauffe.

Cette méthode est bien entendu appliquée en boucle, à des intervalles de temps rapprochés (de l'ordre de quelques millisecondes) pendant le passage du liquide au travers du dispositif de chauffage; notamment, par des moyens de régulation tels qu'un microcontrôleur ou autres moyens de régulation électronique équivalents.

D'autres caractéristiques et avantages de la présente invention ressortiront plus clairement de la description détaillée qui suit de modes de réalisation du dispositif de chauffage selon l'invention, donnés à titre purement illustratif et non limitatif, en liaison avec les dessins annexés sur lesquels :

- la figure 1 est une vue en perspective partiellement arrachée d'un dispositif de chauffage d'un liquide selon un premier mode de réalisation de l'invention ;
- la figure 2 est une vue schématique d'une machine à café comprenant le dispositif de chauffage de la figure 1, le dispositif de chauffage étant représenté en coupe ;
- la figure 3 est une vue en perspective d'un dispositif de chauffage d'un liquide selon un deuxième mode de réalisation de l'invention ;
- la figure 4 est une vue schématique d'une machine à café comprenant le dispositif de chauffage de la figure 3, le dispositif de chauffage étant représenté en coupe.

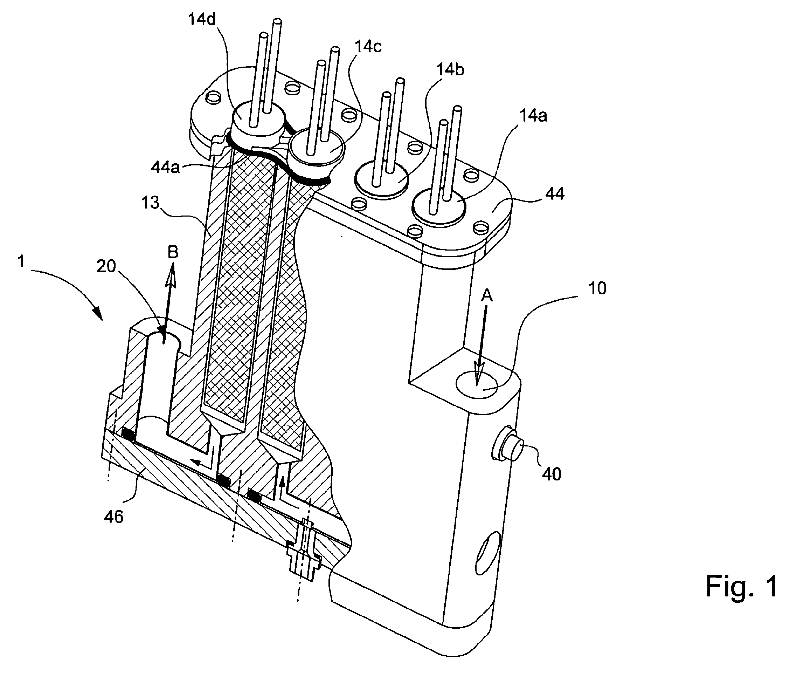

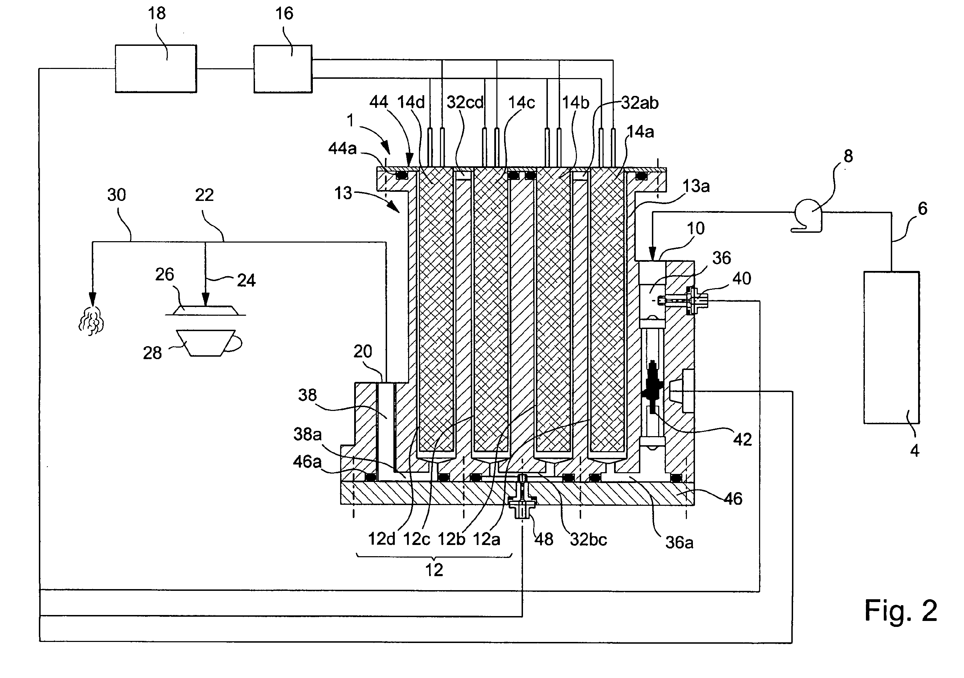

En se référant aux figures 1 et 2, on voit illustré à titre d'exemple un dispositif de chauffage d'un liquide selon un premier mode de réalisation désigné par la référence numérique générale 1, intégré dans une machine à café 2 (figure 2) qui peut indifféremment être destinée à un usage ménager ou industriel. A noter que la nature du liquide à chauffer dans le dispositif de chauffage n'est pas critique et que le liquide peut être quelconque par exemple de l'eau, du lait, une boisson chocolatée etc.. Dans l'application du dispositif de chauffage illustré, le liquide à chauffer est de l'eau. La machine à café 2 illustrée à la figure 2 comprend un réservoir d'eau froide 4 relié via une conduite 6 à une pompe 8 qui alimente en eau le dispositif de chauffage 1 via une entrée de liquide 10. L'eau circule à travers un canal 12 prévu dans un corps 13 du dispositif de chauffage 1. Le canal 12 est associé à des corps de chauffe 14a, 14b, 14c et 14d, dont l'alimentation électrique est commandée par des moyens de commutation 16 reliés à des moyens de commande 18. Les corps de chauffe sont ainsi immergés dans le liquide à chauffer et en contact direct avec celui-ci. L'eau sort du dispositif de chauffage via une sortie de liquide 20 puis circule à travers un conduit 22 pour arriver à travers un conduit 24 sur une cartouche 26 contenant une substance destinée à former une boisson telle que du café à partir de café torréfié et moulu ou de café soluble, du thé, du chocolat ou autres boissons chaudes. La cartouche 26 est, par exemple, une cartouche scellée qui s'ouvre sous la pression du liquide conformément à ce qui est décrit dans le brevet européen No 512 468. Le café coule ensuite dans une tasse 28. La machine permet également de produire de la vapeur via un conduit 30 relié au conduit 22. A la figure 1, la direction de circulation d'eau à travers le dispositif de chauffage est indiquée par les flèches A et B.

Dans le dispositif de chauffage 1 selon le premier mode de réalisation de l'invention, le canal 12 comprend quatre portions de canal 12a, 12b, 12c et 12d, reliées successivement entre elles par trois conduits de liaison 32ab, 32bc et 32cd. Les portions de canal 12a, 12b, 12c et 12d définissent chacune une chambre qui reçoit un corps de chauffe 14a, 14b, 14c et 14d. On notera à ce propos que les conduits de liaison 32ab, 32bc et 32cd présentent des sections transversales inférieures à celles des chambres 12a, 12b, 12c et 12d. Les chambres 12a, 12b, 12c et 12d sont arrangées parallèles entre elles et juxtaposées dans un bloc 13a que comprend le corps 13. Les chambres 12a, 12b, 12c et 12d débouchent toutes sur un premier côté du bloc 13a à une première de leurs extrémités par laquelle les corps de chauffe 14a, 14b, 14c et 14d sont introduits dans les chambres 12a, 12b, 12c et 12d. Les deuxièmes extrémités des chambres 12a, 12b, 12c et 12d débouchent sur un deuxième côté du bloc 13a opposé au premier et les chambres 12a, 12b, 12c et 12d sont reliées entre elles à une de leurs extrémités par les trois conduits de liaison 32ab, 32bc et 32cd. La chambre 12a est reliée d'une part à l'entrée de liquide 10 via un conduit 36 par son extrémité disposée du deuxième côté du bloc 13a et d'autre part à la chambre 12b via le conduit de liaison 32ab par son extrémité disposée du premier côté du bloc 13a. La chambre 12b est reliée à la chambre 12c via le conduit de liaison 32bc par son extrémité disposée du deuxième côté du bloc 13a. La chambre 12c est reliée à la chambre 12d via le conduit de liaison 32cd par son extrémité disposée du premier côté du bloc 13a et la chambre 12d est reliée à la sortie de liquide 20 via un conduit 38 par son extrémité disposée du deuxième côté du bloc 13a.

On notera que chaque corps de chauffe 14a, 14b, 14c et 14d s'étend sensiblement sur toute la longueur de la chambre à laquelle il est associé et présente une forme sensiblement complémentaire à celle de la chambre à laquelle il est associé. Selon une variante avantageuse (non représentée), la surface extérieure des corps de chauffe et/ou la paroi intérieure de la chambre qui lui est associée présente un rainurage hélicoïdal, ce qui permet d'allonger le trajet du liquide pendant lequel il est en contact avec les corps de chauffe sans pour cela augmenter l'encombrement du dispositif de chauffage

Le dispositif de chauffage 1 comprend en outre un capteur de température 40 disposé dans le conduit 36 reliant l'entrée de liquide à l'entrée de la chambre 12a. Ce capteur 40 est arrangé pour venir en contact direct avec le liquide à chauffer et pour mesurer la température du liquide à chauffer à l'entrée du dispositif de chauffage, c'est-à-dire avant qu'il ne soit venu en contact avec un des corps de chauffe du dispositif 1. Un débitmètre 42 est également prévu dans le conduit 36, donc en amont de la chambre 12a.

Comme cela est visible à la figure 2, le corps 13 comprend en outre deux couvercles 44, 46 qui s'étendent respectivement du premier et du deuxième côté du bloc 13a et recouvrent les deux extrémités de chacune des chambres 12a, 12b, 12c et 12d. Le couvercle 44 qui se trouve du premier côté du bloc 13a porte les corps de chauffe 14a, 14b, 14c, et 14d tandis que le couvercle 46 qui se trouve du deuxième côté du bloc 13a porte un capteur de température intermédiaire 48. Le capteur de température intermédiaire 48 est associé au conduit de liaison 32bc et est agencé pour venir en contact direct avec le liquide à chauffer circulant dans le conduit.

Le capteur de température d'entrée 40, le débitmètre et le capteur de température intermédiaire 48 sont reliés aux moyens de commande 18 du dispositif 1.

Le couvercle 44 ferme une première extrémité des chambres 12a, 12b, 12c et 12d et délimite en outre avec le bloc 13a les conduits de liaison 32ab et 32cd. Le couvercle 46 ferme la deuxième extrémité des chambres 12a, 12b, 12c et 12d et délimite le conduit 32bc avec le bloc 13a. Le couvercle 46 délimite en outre un canal 36a reliant le conduit 36 à la chambre 12a ainsi que le canal 38a reliant la chambre 12d au conduit 38. Typiquement, les couvercles 44 et 46 sont fixés sur le bloc 13a au moyens de vis (non représentées) et l'étanchéité est assurée au moyen de joints O ring 44a, 46a interposés entre les couvercles 44, 46 et le bloc 13a.

Les moyens de commande 18 et les moyens de commutation 16 sont configurés pour commander les corps de chauffe 14a, 14b, 14c et 14d. Ces moyens de commande 16 sont particulièrement agencés pour commander les corps de chauffe 14c et 14d disposés respectivement dans les chambres 12c, 12d situées en aval du capteur de température intermédiaire 48 en fonction de la quantité d'énergie utile à apporter dans les chambres 12c et 12d pour amener le liquide à chauffer de la température intermédiaire mesurée par le capteur de température intermédiaire 48 jusqu'à une température de consigne contenue par exemple dans une mémoire des moyens de commande 18.

Les corps de chauffe 14a, 14b, 14c, et 14d comprennent chacun une résistance. Les résistances sont reliées aux moyens de commutation 16 et les moyens de commande 18 sont agencés de manière à pouvoir commuter les résistances indépendamment les unes des autres. Le principe de distribution de l'énergie est basé sur les impulsions données par le débit-mètre (par exemple tous les 100 ms ou moins). A chaque impulsion du débit-mètre correspond une énergie soit un temps de chauffe donné sur les corps de chauffe. Ce système proportionnel permet de réagir à des variations rapides du débit; ce qui peut être le cas au cours du cycle d'extraction d'une capsule, en particulier, au moment du perçage de la capsule. Chaque résistance développe une puissance nominale inférieure à la valeur de puissance théorique de scintillement du réseau, typiquement inférieur à 450W sous 230V. Pour éviter les écarts de puissance en valeur absolue supérieurs à la puissance nominale de chacune des résistances, les moyens de commande 18 sont agencés pour commuter les résistances des corps de chauffe de l'état "en circuit" à l'état "hors circuit" et vice-versa de manière intermittente et non simultanée. La commutation se fait toujours au passage à zéro de la tension pour éviter l'introduction de perturbation dans le réseau électrique. De cette façon, la charge électrique sur le réseau est mieux répartie, ce qui limite les risques de brusques sauts de tension provoquant les phénomènes de scintillement.

Les moyens de commande comprennent en outre des moyens de régulation qui sont prévus pour calculer la quantité d'énergie à affecter aux corps de chauffe 14c, 14d disposés dans les portions de canal 12c, 12d situées en aval du capteur de température intermédiaire 48, en fonction des températures d'entrée et intermédiaire mesurées et du débit mesuré par le débitmètre 42.

Les moyens de régulation comprennent généralement un microcontrôleur, de la mémoire et des programmes de calcul des bilans énergétiques et des facteurs de correction à appliquer. Les calculs des bilans énergétiques, des corrections et les commutations des corps de chauffe, par le microcontrôleurs se font à intervalles de temps très courts de façon à constamment réguler les quantités d'énergie apportées aux corps de chauffe. Les intervalles sont de préférence, de l'ordre de quelques millisecondes, plus préférablement, de moins de 100 ms.

Le mode de régulation automatique est basé sur le principe suivant. Une mesure de température du liquide à l'entrée du dispositif est prise par le capteur de température 40 à l'entrée du dispositif; la quantité de liquide à chauffer est quant à elle prise par un débitmètre 42 sur la base d'impulsions. Une température intermédiaire entre le premier et second corps de chauffe est aussi mesurée par le capteur de température 48.

Ces mesures sont recueillies par un microcontrôleur comprenant un programme de calcul des quantités d'énergie. En particulier, le microcontrôleur calcule ainsi la quantité d'énergie théorique à fournir par le premier corps de chauffe selon la formule :

Quantité d'Energie des premiers corps de chauffe (14a, 14b,14e) = Quantité de liquide à chauffer mesurée par le débit-mètre x (T intermédiaire de consigne – T entrée mesurée) x Capacité calorifique du liquide.

La température intermédiaire de consigne est une valeur déterminée par itération lors de tests du dispositif et qui correspond à une valeur théorique optimale en fonction de la température de sortie désirée. Cette valeur varie en fonction de la température de sortie désirée, par exemple, pour la production d'un café ou d'une autre boisson comme du chocolat. Cette valeur est enregistrée dans le programme du microcontrôleur.

Le microcontrôleur calcule aussi la quantité d'énergie théorique à fournir par le second corps de chauffe selon la formule :

Quantité d'énergie pour les seconds corps de chauffe (14c, 14d, 14f) = Quantité de liquide à chauffer mesurée par le débit-mètre x (Température de sortie désirée – Température intermédiaire mesurée) x Capacité calorifique du liquide.

Le microcontrôleur contrôle ensuite la distribution ces quantités d'énergie calculées, par unité de temps de chauffe, en commandant la commutation on/off des résistances contenues dans les corps de chauffe.

Toutefois, pour tenir compte des éventuelles erreurs et imprécision comme sur la mesure du débit les tolérances sur la puissance des résistances, la tension du réseau, les tolérances sur les capteurs de température, ou autres, il est préférable d'appliquer un facteur de correction calculé selon la formule :

k = (T intermédiaire mesurée – T entrée mesurée)/(T intermédiaire de consigne – T entrée mesurée).

Le facteur de correction est ensuite appliqué par le microcontrôleur pour ajuster la valeur de quantité d'énergie nécessaire à chauffer le liquide dans la seconde chambre afin d'obtenir la température désirée en sortie du bloc chauffant.

Ainsi, la correction sur le(s) corps de chauffe est appliquée de la manière suivante :

Quantité d'énergie corrigée du second corps de chauffe = (2-k) x Quantité d'énergie théorique du second corps de chauffe,

soit encore :

Quantité d'énergie corrigée = (2-K) x Capacité calorifique du liquide x Quantité de liquide à chauffer x (Température de sortie désirée – Température intermédiaire mesurée).

Quantité de liquide à chauffer x (Température de sortie désirée - Température intermédiaire mesurée).

Ainsi lorsque le facteur de correction est inférieur à 1; cela signifie que la quantité d'énergie réelle distribuée par le(s) corps de chauffe en amont de la sonde de température intermédiaire est trop faible et il faut donc appliquer une correction par augmentation de la quantité d'énergie distribuée par le(s) corps de chauffe situés en aval de la sonde de température intermédiaire. Lorsque le facteur est supérieur à 1, cela signifie que la quantité d'énergie réelle distribuée par le(s) corps de chauffe en amont de la sonde de température intermédiaire est trop élevée; et il faut alors appliquer une correction en diminuant la quantité d'énergie distribuée par le(s) corps de chauffe situés en aval de cette sonde. Par exemple, si le facteur de correction est calculé à une valeur de 1.10; cela signifie que la quantité d'énergie distribuée par le(s) premier(s) de chauffe est 10% trop élevée et il faudra alors appliquer une réduction de la quantité d'énergie aux second(s) corps de chauffe de 10% pour obtenir une température de sortie se rapprochant au plus près de la température désirée.

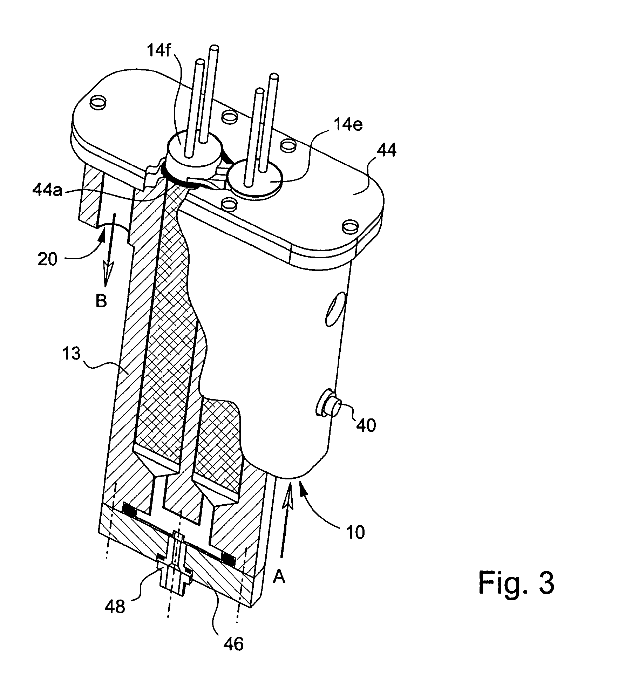

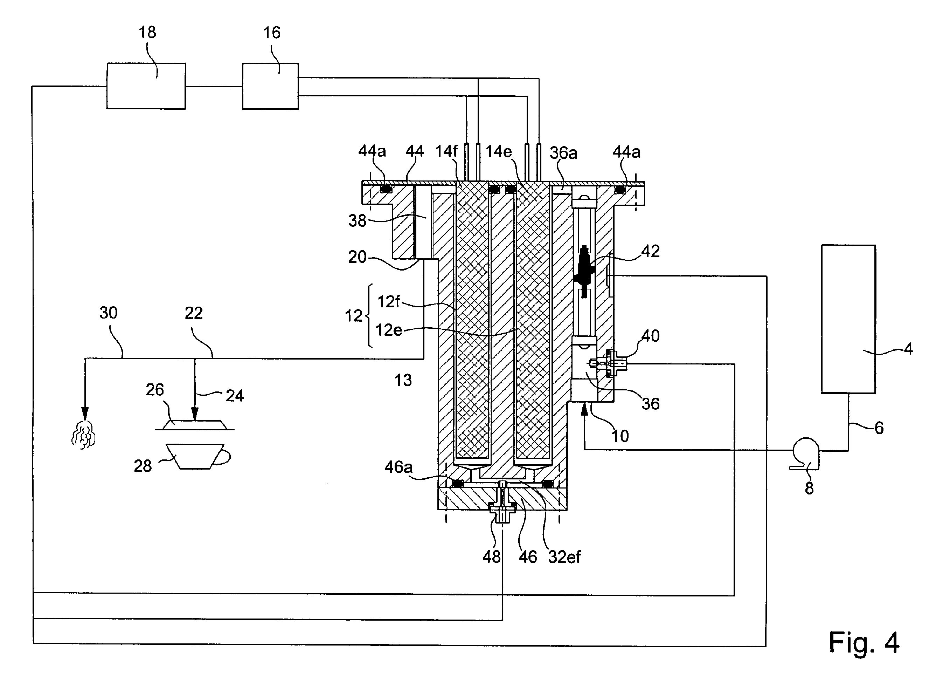

Aux figures 3 et 4 est représenté un dispositif de chauffage d'un liquide selon un deuxième mode de réalisation de l'invention dans lequel les éléments identiques à ceux décrits en liaison avec les figures 1 et 2 sont désignés par les mêmes références numériques.

Ce dispositif de chauffage ne se distingue de celui décrit précédemment qu'en ce que le canal 12 prévu dans le corps 13 et à travers lequel circule le liquide à chauffer ne comprend que deux portions de canal 12e et 12f reliées entre elles par un conduit de liaison 32ef auquel est associé le capteur de température intermédiaire 48 et qu'en ce que les corps de chauffe 14e et 14f associés respectivement aux portions de canal 12e et 12f comprennent chacun deux résistances, chacune d'elles étant reliée aux moyens de commande 18 via les moyens de commutation 16.

De même que dans le premier mode de réalisation, les résistances électriques des corps de chauffe 14e et 14f développent chacune une puissance nominale inférieure à la valeur de puissance théorique de scintillement du réseau typiquement inférieure à 450W sous 230V et les moyens de commande 18 sont agencés pour commuter ces résistances de l'état "en circuit" à l'état "hors circuit" et vice-versa de manière intermittente typiquement à une fréquence de l'ordre de 10 ms. Des corps de chauffe de ce type sont par exemple de cartouches chauffante dite "haute charge" ou "haute densité"; c'est à dire développant une puissante importante par unité de surface de chauffe.

Il va de soi que la présente invention n'est pas limitée aux modes de réalisation qui viennent d'être décrits et que diverses modifications et variantes simples peuvent être envisagées par l'homme du métier sans sortir du cadre de l'invention telle que définie par les revendications annexées. A titre d'exemple, le capteur intermédiaire 48 disposé entre la chambre 12b et 12c aux figures 1 et 2 pourrait également être disposé entre la chambre 12c et 12d, l'idée étant que le capteur de température intermédiaire soit disposé en aval d'une chambre comprenant un corps de chauffe et communiquant avec l'entrée de liquide et en amont d'une chambre comprenant un corps de chauffe et communiquant avec la sortie de liquide.

## Revendications

1. Dispositif de chauffage d'un liquide en liquide chaud ou en vapeur, notamment pour des applications ménagères et plus particulièrement pour la préparation de café, comprenant un corps muni d'un canal pour la circulation d'un liquide, ledit canal ayant une entrée de liquide et une sortie de liquide et étant associé à au moins un corps de chauffe électrique dont l'alimentation est commandée par des moyens de commutation reliés à des moyens de commande, ledit dispositif étant **caractérisé en ce** ledit canal comprend au moins des première et deuxième portions de canal reliées entre elles par une troisième portion de canal formant un conduit de liaison, en ce que lesdites au moins première et deuxième portions de canal sont associées chacune à au moins un corps de chauffe et en ce que le conduit de liaison est associé à un capteur de température intermédiaire relié audits moyens de commande, ledit capteur de température intermédiaire étant arrangé pour venir en contact direct avec le liquide circulant dans ledit conduit et les moyens de commande et de commutation étant configurés pour commander le corps de chauffe de ladite au moins seconde portion de canal en fonction de la quantité d'énergie utile à apporter dans ladite seconde portion de canal pour amener le liquide à chauffer de la température intermédiaire mesurée par ledit capteur de température intermédiaire jusqu'à une température de consigne en sortie du dispositif.

2. Dispositif de chauffage d'un liquide selon la revendication 1, **caractérisé en ce que** les corps de chauffe sont immergés dans le liquide à chauffer.

3. Dispositif selon la revendication 1 ou 2, **caractérisé en ce qu'**il comprend en outre un capteur de température d'entrée de liquide arrangé pour venir en contact direct avec le liquide à l'entrée du dispositif et un débitmètre disposé en amont de l'entrée de la première chambre.

4. Dispositif selon la revendication 3, **caractérisé en ce que** des moyens de régulation sont prévus pour calculer un facteur de correction de la puissance à affecter au corps de chauffe de ladite seconde portion de canal en fonction des températures d'entrée et intermédiaire mesurées et du débit mesuré par le débitmètre.

5. Dispositif selon l'une quelconque des revendications 1 à 4, **caractérisé en ce que** chaque corps de chauffe comprend au moins une résistance, chaque résistance de chaque corps de chauffe étant commutable indépendamment.

**6.** Dispositif selon la revendication 5, **caractérisé en ce que** les corps de chauffe sont au nombre de deux et comprennent chacun deux résistances, chaque résistance des deux corps de chauffe étant agencée pour être commutée indépendamment l'une de l'autre par les moyens de commutation.

**7.** Dispositif selon la revendication 5, **caractérisé en ce que** les corps de chauffe sont au nombre de quatre, chacun étant logé dans une portion de canal séparée et chacun comprenant une résistance, chaque résistance étant agencée pour être commutée indépendamment par les moyens de commutation.

**8.** Dispositif selon la revendication 5, 6 ou 7, **caractérisé en ce que** chaque résistance développe une puissance nominale inférieure à la valeur de puissance théorique de scintillement du réseau et **en ce que** les résistances sont commutées dans une position marche-arrêt par les moyens de commutation de manière décalée pour éviter les écarts de puissance en valeur absolue supérieurs à la puissance nominale de chacune des résistances.

**9.** Dispositif selon la revendication 7, **caractérisé en ce que** chaque résistance développe une puissance électrique nominale inférieure à 450W.

**10.** Dispositif de chauffage d'un liquide selon l'une quelconque des revendications précédentes, **caractérisé en ce que** lesdites portions de canal associées respectivement à au moins un corps de chauffe forment chacune des chambres reliées entre elles par un conduit de liaison qui présente une section transversale inférieure à celle des chambres.

**11.** Dispositif de chauffage d'un liquide selon la revendication 10, **caractérisé en ce que** la surface extérieure des corps de chauffe et/ou la paroi intérieure de la chambre qui lui est associée présente un rainurage hélicoïdal.

**12.** Dispositif selon l'une des revendications 10 ou 11, **caractérisé en ce que** le corps comprend un bloc dans lequel sont ménagées lesdites chambres, **en ce que** lesdites chambres sont parallèles entre elles et débouchent de part et d'autre du bloc, **en ce qu'**elles sont reliées entre elles à une de leurs extrémités par un conduit de liaison et **en ce que** le corps comprend en outre deux couvercles qui recouvrent respectivement des premières et deuxièmes extrémités desdites chambres.

**13.** Dispositif selon la revendication 12, **caractérisé en ce que** le premier couvercle qui est associé à des premières extrémités desdites chambres porte les corps de chauffe et **en ce que** le deuxième couvercle qui est associé aux deuxièmes extrémités desdites chambres porte le capteur de température intermédiaire.

**14.** Dispositif selon la revendication 13, **caractérisé en ce que** les premier et deuxième couvercles délimitent avec le bloc le ou les conduits de liaison.

**15.** Dispositif selon la revendication 13, **caractérisé en ce que** le deuxième capteur et le débitmètre sont disposés dans un conduit ménagé dans le bloc et reliant l'entrée de liquide à l'entrée d'une première chambre.

**16.** Dispositif selon la revendication 12, **caractérisé en ce que** chaque corps de chauffe s'étend sur toute la longueur de la chambre à laquelle il et associé et **en ce qu'**il présente une forme complémentaire à celle de la chambre à laquelle elle est associée.

**17.** Dispositif selon l'une quelconque des revendications précédentes, **caractérisé en ce que** le capteur de température intermédiaire est disposé en aval de la chambre communiquant avec l'entrée de liquide et en amont de la chambre communiquant avec la sortie de liquide.

**18.** Procédé pour chauffer rapidement et précisément un liquide notamment pour des applications ménagères et plus particulièrement pour la préparation de café, à partir d'un dispositif de chauffage comprenant un corps muni d'un canal pour la circulation du liquide, d'au moins un premier corps de chauffe, d'au moins un second corps de chauffe, **caractérisé en ce que**
on mesure la température du liquide à l'entrée du dispositif,
on mesure la quantité de liquide à chauffer par un débitmètre,
on calcule la quantité d'énergie théorique à fournir par le premier corps de chauffe en fonction de la quantité de liquide mesurée, de la température mesurée à l'entrée du dispositif, d'une température intermédiaire de consigne et de la capacité calorifique du liquide,
on mesure la température intermédiaire entre le premier et second corps de chauffe,

on calcule la quantité d'énergie théorique à fournir par le second corps de chauffe en fonction de la quantité du liquide à chauffer mesurée, de la température intermédiaire mesurée, de la température de consigne en sortie du dispositif et de la capacité calorifique du liquide,

on applique ces quantités d'énergie calculées, respectivement, aux premiers et second corps de chauffe pour amener le liquide jusqu'à la (ou tout au moins au plus près de la) température de consigne désirée en sortie du dispositif.

**19.** Procédé selon la revendication 18, **caractérisé en ce qu'** on calcule un facteur de correction selon la formule:

k = (Température intermédiaire mesurée – Température d'entrée

mesurée)/(Température intermédiaire de consigne – Température d'entrée mesurée),

on applique ce facteur de correction pour calculer la quantité d'énergie à fournir par le second corps de chauffe.

EP 1 634 520 A1

Fig. 1

Fig. 2

Fig. 3

EP 1 634 520 A1

Fig. 4

EP 1 634 520 A1

**Office européen des brevets**

**RAPPORT DE RECHERCHE EUROPEENNE**

Numéro de la demande

EP 04 02 1674

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 6 246 831 B1 (SEITZ DAVID E ET AL) 12 juin 2001 (2001-06-12) | 1,2,5-8, 10, 12-14, 16,17 | A47J31/54 F24H1/10 |
| Y | * colonne 21, ligne 3-49; revendications; figure 1 * ----- | 3,4,9, 11,15,19 | |
| D,Y | EP 1 380 243 A1 (NESTEC S.A) 14 janvier 2004 (2004-01-14) * pages 7-10; figures 1-4 * ----- | 3,4,9, 11,15,19 | |
| A | US 6 459 854 B1 (YOAKIM ALFRED ET AL) 1 octobre 2002 (2002-10-01) * colonne 4, ligne 4-67; figures 2,3 * ----- | 1,18 | |

**DOMAINES TECHNIQUES RECHERCHES (Int.Cl.7)**

A47J
F24H

Le présent rapport a été établi pour toutes les revendications

| Lieu de la recherche | Date d'achèvement de la recherche | Examinateur |
|---|---|---|
| La Haye | 4 février 2005 | Van Bastelaere, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 02 1674

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-02-2005

| Document brevet cité au rapport de recherche | | | Date de publication | Membre(s) de la famille de brevet(s) | | | Date de publication |
|---|---|---|---|---|---|---|---|
| US 6246831 | B1 | | 12-06-2001 | AU | 774789 | B2 | 08-07-2004 |
| | | | | AU | 5739900 | A | 02-01-2001 |
| | | | | CA | 2376219 | A1 | 21-12-2000 |
| | | | | CN | 1370261 | T | 18-09-2002 |
| | | | | EP | 1208334 | A1 | 29-05-2002 |
| | | | | WO | 0077456 | A1 | 21-12-2000 |
| EP 1380243 | A1 | | 14-01-2004 | WO | 2004006742 | A1 | 22-01-2004 |
| US 6459854 | B1 | | 01-10-2002 | AU | 3363301 | A | 07-08-2001 |
| | | | | BR | 0016920 | A | 03-12-2002 |
| | | | | CA | 2396003 | A1 | 02-08-2001 |
| | | | | CN | 1424886 | T | 18-06-2003 |
| | | | | CZ | 20022872 | A3 | 12-02-2003 |
| | | | | WO | 0154551 | A1 | 02-08-2001 |
| | | | | EP | 1253844 | A1 | 06-11-2002 |
| | | | | HU | 0204469 | A2 | 28-03-2003 |
| | | | | JP | 2003521802 | T | 15-07-2003 |
| | | | | MA | 25642 | A1 | 31-12-2002 |
| | | | | MX | PA02007168 | A | 13-12-2002 |
| | | | | NO | 20023418 | A | 16-07-2002 |
| | | | | PL | 356371 | A1 | 28-06-2004 |
| | | | | SI | 20844 | A | 31-10-2002 |
| | | | | SK | 10752002 | A3 | 03-12-2002 |

EPO FORM P0460

Pour tout renseignement concernant cette annexe : voir Journal Officiel de l'Office européen des brevets, No.12/82